# EUROPEAN PATENT APPLICATION

(11) **EP 1 748 585 A2**
(43) Date of publication of application: **31.01.2007**
(21) Application number: 06117811.7
(22) Date of filing: 25.07.2006
(51) Int. Cl.: H04H 1/00

(54) **Device for receiving broadcast signals and method for controlling a device for receiving broadcast signals**

(30) Priority: 26.07.2005 KR 20050068030
(71) Applicant: Samsung Electronics Co., Ltd., Suwon-si Gyeonggi-do (KR)
(72) Inventor: Lee, Ki-won, Yeongtong-gu, Suwon-si, Gyeonggi-do (KR)
(74) Representative: Clark, Charles Robert

(57) **Abstract**

A method of controlling a broadcast signal receiving device including a broadcast receiving part for receiving a broadcast signal and supporting a broadcast program viewing restriction function, the method comprises: parsing and storing broadcast program rating information included in the received broadcast signal; generating a user interface for selecting restricted rating information about the viewing restriction function, when the viewing restriction function is selected; storing the restricted rating information selected by a user; and searching the rating information to switch to a channel of viewable rating on the basis of the restricted rating information, when a channel switching function is selected. Additionally, provided is a broadcast signal receiving device and its control method to promote user's convenience by performing a channel switching function, channel list function, and/or a broadcast information display function for the channel of the rating that the user wants to watch.

## Description

The present invention relates to a broadcast signal receiving device and its control method, and more particularly, to a broadcast signal receiving device and its control method for supporting a viewing restriction function of broadcast programs.

In general, terrestrial, cable, and satellite broadcasts transmit additional information for broadcast programs, in addition to the video and audio signals. The additional information for broadcast programs transmitted at this time may include the rating information.

On the other hand, TV can support a viewing restriction function by using the rating information included in transmitted broadcast signals. In case of conventional TVs which support such a viewing restriction function of broadcast programs, the user is provided with a User Interface (UI) to perform the viewing restriction function on broadcast programs to be received on the basis of the viewing restriction rating indicated by the user. Typically, a Violence (V) chip integrated in TV's performs this function. So-called V-chips are known in the art.

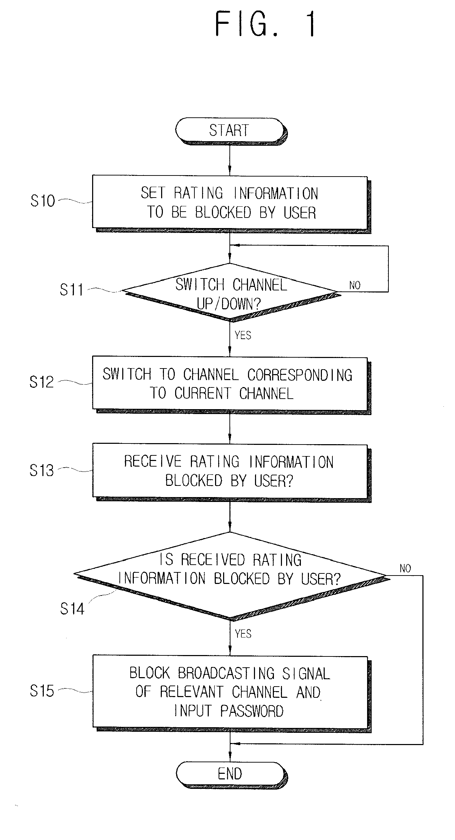

Figure 1 is an algorithm of a typical V-chip in conventional TVs. As illustrated in Figure 1, when the rating information to be blocked is selected by a user, it is established at operation S10.

When channel switching is selected by the user at operation S 11, the channel is switched to the next channel up or down from the current channel (S12), and the rating information of the switched channel is received. Then, the block rating information that has been blocked by the user is compared with the rating information of the switched channel at operation S13.

If the rating information of the switched channel corresponds to the rating that has been blocked by the user, then the broadcast signal of the relevant channel is blocked, and an On Screen Display (OSD) screen for the password input is displayed at operation S14. Here, when the password is entered by the user, the block function of the relevant channel is abandoned.

Furthermore, the aforementioned viewing restriction function in conventional TVs operates regardless of the channel list display function indicating the information of channels allocated to the user and/or the broadcast information (for example, electronic program guide (EPG) information) display function. In other words, even though the relevant channel corresponds to the channel that has been blocked by the user, the information for that channel will be displayed on the channel list and the broadcast information.

However, establishing a viewing restriction function by the user means that he or she has no intention to watch the channel corresponding to the block rating, so it may cause inconvenience for the user or may be an unnecessary function that the blocked screen of the channel which corresponds to the block rating is shown, or the information of blocked channels is indicated.

An aspect of the present invention to provide a broadcast signal receiving device and its control method to promote a user's convenience by performing a channel switching function, a channel list function, and/or a broadcast information display function for the channel of the rating that the user wants to watch.

Another aspect of the present invention can be achieved by providing a method of controlling a broadcast signal receiving device including a broadcast receiving part for receiving a broadcast signal and supporting a broadcast program viewing restriction function, the method comprising: parsing and storing broadcast program rating information included in the received broadcast signal; generating a user interface for selecting restricted rating information about the viewing restriction function, when the viewing restriction function is selected; storing the restricted rating information selected by a user; and searching the rating information to switch to a channel of a viewable rating on the basis of the restricted rating information, when a channel switching function is selected.

According to an embodiment of the present invention, when the channel switching function is selected, the switching of the channel comprises searching a rating of a destination channel sequentially according to the channel switching function on the basis of the restricted rating information, and determining whether the rating of the destination channel is the viewable rating.

According to an embodiment of the present invention, when an up/down switching function of channel is selected, the switching of the channel comprises searching a rating of a destination channel sequentially according to the up/down switching function on the basis of the restricted rating information, and determining whether the rating of the destination channel is the viewable rating.

Another aspect of the present invention can be achieved by providing a method of controlling a broadcast signal receiving device, including a broadcast receiving part for receiving a broadcast signal and supporting a broadcast program viewing restriction function, the method comprising: parsing and storing broadcast program rating information included in the received broadcast signal; generating a user interface for selecting restricted rating information about the viewing restriction function, when the viewing restriction function is selected; storing the restricted rating information selected by a user; and searching the stored rating information to generate and display a list of one or more channels of viewable rating on the basis of the restricted rating information, when a channel list function is selected.

Another aspect of the present invention can be achieved by providing a method of controlling a broadcast signal receiving device, including a broadcast receiving part for receiving a broadcast signal and supporting a broadcast program viewing restriction function, the method comprising: parsing and storing broadcast program guide information rating information included in the received broadcast signal; generating a user interface for selecting restricted rating information about the viewing restriction function, when the viewing restriction function of the broadcast program is selected; storing the restricted rating information selected by a user; and searching the broadcast program guide information rating information to generate and display a broadcast program guide table about one or more channels of viewable rating on the basis of the restricted rating information, when a broadcast program guide information display function is selected.

Another aspect of the present invention can be achieved by providing a broadcast signal receiving device comprising: a broadcast receiving unit which receives a broadcast signal having broadcast program rating information and supports a viewing restriction function with regard to the broadcast program rating information; a parsing unit which parses the rating information of the broadcast program included in the received broadcast signal; a user selection unit; a memory which stores restricted rating information selected through the user selection unit; and a control unit which searches the rating information to switch to a channel of viewable rating on the basis of the restricted rating information, when a channel switching function is selected through the user selection unit.

According to an embodiment of the present invention, the broadcast signal receiving device further comprises a user interface generation unit, wherein, when the viewing restriction function is selected through the user selection unit, the control unit controls the user interface generation unit to generate a user interface menu which allows a user to select the restricted rating information about the viewing restriction function, and when the restricted rating information is selected through the user selection unit, the control unit stores the selected restricted rating information in the memory.

According to an embodiment of the present invention, when the channel switching function is selected through the user selection unit, the control unit searches a rating of a destination channel sequentially according to the channel switching function to determine whether the rating of the destination channel is a viewable rating on the basis of the restricted rating information.

According to an embodiment of the present invention, when an up/down switching function of channel is selected through the user selection unit, the control unit searches a rating of a destination channel sequentially according to the up/down switching function to determine whether the rating of the destination channel is a viewable rating on the basis of the restricted rating information.

According to an embodiment of the present invention, the rating information is included in at least one of MPEG (Moving Picture Experts Group) user data, PMT (Program Map Table), EIT (Event Information Table), AEIT (Aggregate Event Information Table), and VBI (Vertical Blanking Interval) data.

According to an embodiment of the present invention, when a channel list function is selected through the user selection unit, the control unit searches the rating information on the basis of the restricted rating information to control the user interface generation unit to generate and display a channel list regarding one or more channels of the viewable rating.

According to an embodiment of the present invention, the parsing unit parses broadcast program guide information included in the received broadcast signal, and when a function of displaying the broadcast program guide information is selected, the control unit controls the user interface generation unit on the basis of the restricted rating information and the rating information to generate and display a broadcast program guide table regarding the channels of the viewable rating.

According to an embodiment of the present invention, when a plurality of restricted ratings are selected through the user selection part, the control unit performs the channel switching function on the basis of a plurality of restricted rating information that have been selected.

Embodiments of the present invention are now described by way of example, with reference to, and taken in conjunction with, the accompany drawings, in which:
Figure 1 is a flow chart illustrating a viewing restriction function of a V-chip in conventional TVs;
Figures 2 and 3 are a block diagram and an UI menu of the TV according to an exemplary embodiment of the present invention; and
Figure 4 is a flow chart of the TV according to an exemplary embodiment of the present invention.

Reference will now be made in detail to embodiments of the present invention, examples of which are illustrated in the accompanying drawings, wherein like reference numerals refer to like elements throughout. The embodiments are described below so as to explain the present invention by referring to the Figures.

Hereinafter, an embodiment of the present invention will be described in detail with reference to the accompanying drawings. In an embodiment of the present invention, the broadcast signal received by the TV will be assumed to follow the ATSC (Advanced Television Systems Committee).

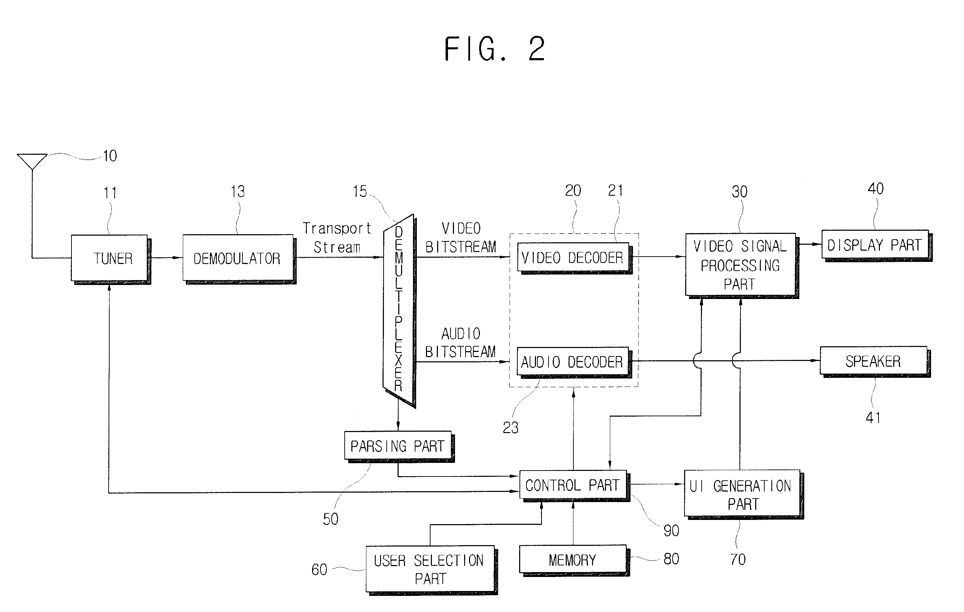

Figure 2 is a block diagram of a digital TV according to an embodiment of the present invention. As illustrated in Figure 2, the digital TV according to the present invention includes an antenna 10, a tuner 11, a demodulator 13, a demultiplexing part 15, a decoding part 20, a video signal processing part 30, a display part 40, a speaker 41, a parsing part 50, a user selection part 60, an UI generation part 70, a memory 80, and a control part 90.

The tuner 11 will tune a broadcast signal being received through the antenna 10 to the broadcast signal having its corresponding frequency bandwidth according to the tuning control signal of the control part 90 to be described later. Here, the digital broadcast signal is transmitted in a form of transport stream in which video signal, audio signal, and various data are multiplexed in time division and packaged or packetized.

The broadcast signal of a specific channel that is tuned by the tuner 11 is outputted in the form of transport stream through the processes of demodulation, error correction, and the like by the demodulator 13. Moreover, it is divided into video stream, audio stream, and data stream by the demultiplexing part 15 and outputted in bitstream format.

The video stream that has been separated through the demultiplexing part 15 is decoded by an MPEG decoder, which is a video decoder 21, and displayed on the display part 40 after processing in the video signal processing part 30. Here, the display part 40 is applicable to various types of display modules such as DLP (Digital Light Processing), LCD (Liquid Crystal Display), PDP (Plasma Display Panel), and the like, and the video signal processing part 30 includes a scaler for converting the video stream into the vertical frequency, resolution, screen ratio, etc. to satisfy the output standard of the display part 40.

Furthermore, the audio stream is decoded by the audio decoder 23 to be outputted to the speaker 41.

On the other hand, various data streams that have been separated through the demultiplexing part 15 are parsed by the parsing part 50 to be stored in a predetermined region of memory (not shown) per each data table.

The data streams being transmitted include the guide information and service information of broadcast programs. In the ATSC standard, the classifications for the information delivered through the relevant transmission channel and the PSIP (Program and System Information Protocol) for service information such as program guide are specified and used. In the ATSC standard, the classification of a channel is possible without using the PSI (Program Specific Information) standard, which is part of the MPEG-2 system standard, and the PSI is transmitted regardless of its MPEG-2 compatibility. At this time, the broadcast program guide information stored in the memory (not shown) is combined with the video signal tuned at present through the video signal processing part 30 according to the control of the control part 90 to be described later to be displayed on the display part 40. In this way, the user will know the broadcast program information (for example, EPG information).

On the other hand, the parsing part 50 parses the rating information contained in the additional data to store in the memory (not shown). The rating information can be known through the content advisory descriptor indicating the values about the rating, which is defined in the user information of MPEG-2, the PMT (Program Map Table) of PSI, the MGT (Master Guide Table) of PSIP, and the RRT (Rating Region Table) of EIT (Event Information Table). In addition, in case of a cable broadcast, it is included in the MPEG-2 user data, PMT, or AEIT (Aggregate Event Information Table), and in case of an analogue broadcast, it is included in the VBI (Vertical Blanking Interval) for transmission.

In the digital TV according to an embodiment of the present invention, the information about internal channel list is stored, and the rating information of the channel parsed by the parsing part 50 can be also stored in this internal channel list. For example, in case of a cable broadcast, when the AEIT is carried by the OpenCable OOB SI, the rating information in the internal channel list will be updated on the basis of the AEIT, and when the AEIT is not carried, the rating information of the relevant channel will be updated in the internal channel list by searching the channel using a different tuner except the tuner tuning a current channel.

The user selection part 60 is provided for user's input such as selecting and releasing a viewing restriction function, channel switching, and the like, and it may include menu keys that are provided in a wireless remote control (not shown), and a key signal generating part for generating key signals (not shown) in response to key manipulation. Here, the user selection part 60 may be provided with mouse, keyboard, or the like, or may be provided with the main panel of digital TV.

Furthermore, the UI generation part 70 generates an UI menu for selecting the rating according to the viewing restriction function by the control of the control part 90 to be described later, and it may also be realized by the OSD (On Screen Display) generation IC, and the like. The UI menu generated in this way is combined with the video signal being processed at present through the video signal processing part 30, and then displayed on the display part.

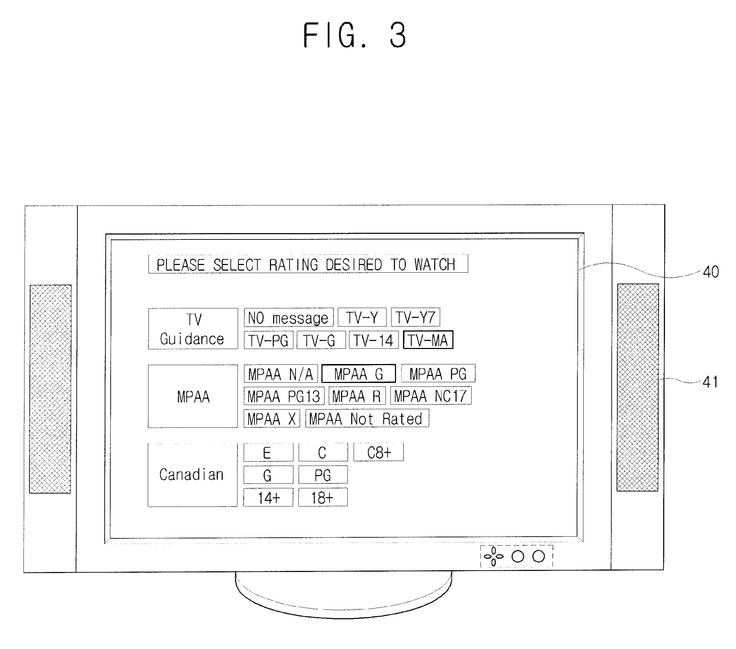

The UI menu for selecting the rating generated by the UI generation part 70 will be described with reference to Figure 3.

As illustrated in Figure 2, the UI menu for selecting the rating generated by the UI generation part 70 includes the items for MPAA (Motion Picture Association of America) ratings, as well as the items for TV ratings. In addition, the UI menu may include the items for Canadian community ratings.

The user may select an item corresponding to the rating that he or she wants to watch by manipulating arrow keys in the user selection part 60, or may indicate plural items. In other words, plural ratings that the user wants to watch may be selected. The UI menu, as illustrated in Figure 3, is an example only, and it can be designed in a variety of ways.

The control part 90 controls each of components to perform the relevant function by the key signal input and/or prescribed program in the user selection part, and it is configured by the controller such as microcomputer, and the like.

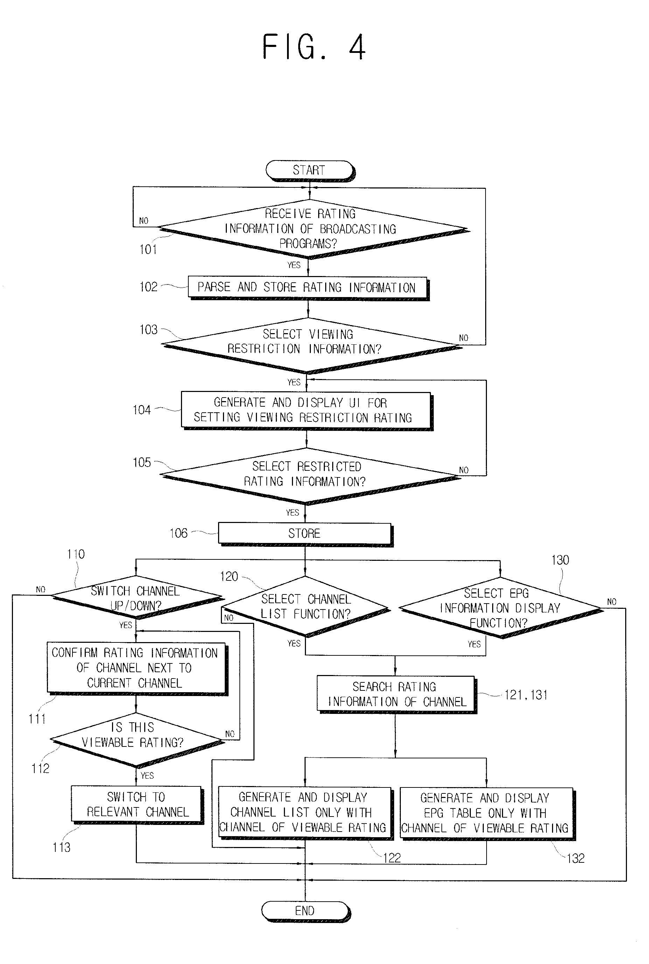

Specifically, the control part 90 takes charge of controlling the signal processing of the received broadcast signal, etc., as well as controlling the setting of viewing restriction function. In addition, when a variety of functions such as channel switching, channel list display, and/or broadcast program information display, and the like are selected in the condition that viewing restriction function is set, it confirms the rating information of each channel in the internal channel list on the basis of the viewing restriction rating stored in the memory 80 to perform the relevant function only for one or more channels corresponding to the viewable rating. More specific description for the control part 90 are described with reference to Figure 4.

Figure 4 is a flow chart of a digital TV according to an embodiment of the present invention.

Among the additional data included in broadcast signals to be transmitted, the parsing part 50 parses the guide information and service information of broadcast programs and stores it in the memory (not shown), in particular, when rating information is included in the additional data at operation 101, the parsing part 50 parses the rating information for each channel to be stored in the internal channel list at operation 102.

If viewing restriction function is selected by the user selection part 60 at operation 103, the control part 90 allows the UI generation part 70 to generate and display an UI menu for selecting the viewing restriction rating that the user wants to watch at operation 104. Furthermore, when the rating that the user wants to watch is selected by manipulating the user selection part 60 at operation 105, the control part 90 stores this in the memory 80 at operation 106.

In addition, when the channel switching function of a television is selected by the user selection part 60 at operation 110, the control part 90 confirms the rating information of the next channel, which is a switched destination channel, through the internal channel list stored in the memory 80 at operation 111.

The control part 90 determines whether the rating information of the switched destination channel corresponds to the rating that the user wants to watch at operation 112, and if it corresponds to a viewable rating, the channel will be switched to the relevant channel at operation 113, and if it does not correspond to a viewable rating, the rating information of the next channel will be confirmed at operation 111. Such operations 111 through 113 will be executed repeatedly until the user finds the channel of the rating that he or she wants to watch.

For example, assume that the user sets up TV-Y and MPAA G as the rating that he or she wants to watch on the UI menu of Figure 3, and the up channel switch button is selected through the user selection part 60 while watching the channel 50-1 at present, when the channel 50-2 is rated as TV-Y7 the channel 50-3 as TV-MA, and the channel 50-4 as MPAA G, then the control part 90 will search the internal channel list, and skip the channels 50-2 and 50-3, and switch to the channel 50-4 directly from the channel 50-1. In other words, the channels of the rating that the user does not want to watch will be skipped.

If the channel list display function is selected through the user selection part 60 at operation 120, then the control part 90 searches the internal channel list at operation 121, to control the UI generation part 70, thereby generating a channel list only with the channels corresponding to the rating that the user chooses to watch at operation 122. In the aforementioned example, the channels 50-2 and 50-3 corresponding to the rating that the user does not want to watch will not be displayed in the channel list.

Furthermore, when the function of displaying broadcast program guide information, for example, EPG information, is selected by the user through the user selection part 60 at operation 130, the control part 90 searches the internal channel list at operation 131 to control the UI generation part 70, thereby generating an EPG table only with the channels corresponding to the rating that the user chooses to watch at operation 132. The EPG information generated in this way is combined with the video signal of the current channel, and displayed on the display part 40. By means of this, the user can confirm the broadcast information only about one or more channels corresponding to the rating that he or she wants to watch. Therefore, when a viewing restriction function is selected, a user's intention can be satisfied by performing the relevant function only on one or more channels corresponding to the rating that the user wants to watch in connection with performing the function about digital TV channels.

The present invention can be applied to a broadcast signal receiving device for receiving terrestrial, cable, and/or satellite broadcast signals, and also applied to a broadcast signal receiving device for receiving analogue broadcast signals other than digital broadcast signal. Moreover, the present invention can be applied to other functions related to channels, in addition to channel switching function, channel list function, and broadcast program guide information display function.

As described above, a broadcast signal receiving device and its control method to promote user's convenience is provided by performing the channel switching function, channel list function and/or broadcast information display function on the channels of the rating that the user wants to watch.

Although a few embodiments of the present invention have been shown and described, it will be appreciated by those skilled in the art that changes may be made in these embodiments without departing from the principles of the invention, the scope of which is defined in the appended claims and their equivalents.

## Claims

1. A method of controlling a broadcast signal receiving device, including a broadcast receiving part for receiving a broadcast signal and supporting a broadcast program viewing restriction function, the method comprising:
parsing and storing broadcast program rating information, or broadcast program guide information, included in the received broadcast signal;
generating a user interface for selecting restricted rating information about the viewing restriction function, when the viewing restriction function is selected;
storing the restricted rating information selected by a user; and
when a first function is selected, searching the rating or guide information to carry out the first function on the basis of the restricted rating or guide information.

2. A method according to claim 1, wherein the first function is a channel switching function, and the rating information is searched to switch to a channel of a viewable rating on the basis of the restricted rating information.

3. The method according to claim 2, wherein, when the channel switching function is selected, the switching of the channel comprises searching a rating of a destination channel sequentially according to the channel switching function on the basis of the restricted rating information, and determining whether the rating of the destination channel is the viewable rating.

4. The method according to claim 2 or 3, wherein, when an up/down switching function of channel is selected, the switching of the channel comprises searching a rating of a destination channel sequentially according to the up/down switching function on the basis of the restricted rating information, and determining whether the rating of the destination channel is the viewable rating.

5. A method according to claim 1, wherein the first function is a channel list function, and the stored rating information is searched to generate and display a list of one or more channels of viewable rating on the basis of the restricted rating information, when the channel list function is selected.

6. A method according to claim 1, wherein the first function is a broadcast program guide information display function, and the broadcast program guide information or rating information is searched to generate and display a broadcast program guide table about one or more channels of viewable rating on the basis of the restricted rating information, when the broadcast program guide information display function is selected.

7. A broadcast signal receiving device comprising:
a broadcast receiving unit arranged to receive a broadcast signal having broadcast program rating information and arranged to support a viewing restriction function with regard to the broadcast program rating information;
a parsing unit for parsing the rating information of the broadcast program included in the received broadcast signal;
a user selection unit;
a memory for storing restricted rating information selected through the user selection unit; and
a control unit arranged to search the rating information and arranged to carryout a first function on the basis of the restricted rating information when the first function is selected through the user selection unit.

8. The device according to claim 7, wherein the first function is a channel switching function, and the control unit is arranged to switch to a channel of a viewable rating on the basis of the restricted rating information when the first function is selected through the user selection unit.

9. The broadcast signal receiving device according to claim 8, further comprising a user interface generation unit,
wherein, the control unit is arranged to control the user interface generation unit and to generate a user interface menu for allowing a user to select the restricted rating information about the viewing restriction function when the viewing restriction function is selected through the user selection unit, and
the control unit is arranged to store the selected restricted rating information in the memory when the restricted rating information is selected through the user selection unit.

10. The broadcast signal receiving device according to claim 9, wherein, the control unit is arranged to search for a rating of a destination channel, according to the channel switching function, to determine whether the rating of the destination channel is a viewable rating on the basis of the restricted rating information when the channel switching function is selected through the user selection unit.

11. The broadcast signal receiving device according to claim 9, wherein, the control unit is arranged to search for a rating of a destination channel, according to the up/down switching function, to determine whether the rating of the destination channel is a viewable rating on the basis of the restricted rating information when an up/down switching function of channel is selected through the user selection unit.

12. The broadcast signal receiving device according to claim 10, wherein the rating information is included in at least one of MPEG (Moving Picture Experts Group) user data, PMT (Program Map Table), EIT (Event Information Table), AEIT (Aggregate Event Information Table), and VBI (Vertical Blanking Interval) data.

13. The broadcast signal receiving device according to claim 7 or 10, wherein, the first function is a channel list function, and the control unit is arranged to search rating information on the basis of the restricted rating information to control the user interface generation unit to generate and display a channel list regarding one or more channels of the viewable rating when the first function is selected through the user selection unit.

14. The broadcast signal receiving device according to claim 7 or 10, wherein the parsing unit is arranged to parse broadcast program guide information included in the received broadcast signal, and
wherein the first function is a function of displaying the broadcast program guide information, and the control unit is arranged to control the user interface generation part on the basis of the restricted rating information and the rating information to generate and display a broadcast program guide table regarding the channels of viewable rating when the first function is selected.

15. The broadcast signal receiving device according to claim 9, wherein, the control unit is arranged to perform the channel switching function on the basis of a plurality of restricted rating information that are selected through the user selection part.
